# EUROPEAN PATENT APPLICATION

(11) **EP 4 501 536 A1**
(43) Date of publication of application: **05.02.2025**
(21) Application number: 23780309.3
(22) Date of filing: 27.03.2023
(51) Int. Cl.: B24B 1/00, B24B 7/22, B28B 11/08, C04B 35/583, C04B 35/587, C04B 35/64

(54) **BORON NITRIDE PLATE SURFACE TREATMENT METHOD, METHOD FOR PRODUCING CERAMIC SINTERED BODY, AND METHOD FOR PRODUCING BORON NITRIDE PLATE**

(30) Priority: 28.03.2022 JP 2022051452
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: MATSUMOTO, Ikki, Yokohama-shi, Kanagawa 235-0032 (JP)
(74) Representative: Henkel & Partner mbB
(86) International application number: PCT/JP2023/012125
(87) International publication number: WO 2023/190299

(57) **Abstract**

A boron nitride plate surface treatment method according to an embodiment includes a first polishing process and a second polishing process. In the first polishing process, a surface of a boron nitride plate (1) is polished by using a first polishing member having a grit within a range of not less than F120 and not more than F220 or within a range of not less than #240 and not more than #320. In the second polishing process, the surface of the boron nitride plate (1) is polished by using a second polishing member having a grit within a range of not less than #360 and not more than #1000. The second polishing process is performed after the first polishing process. The boron nitride plate (1) is suitable for a method for producing a silicon nitride substrate. In the first polishing process, it is favorable for the pressing amount of the first polishing member to be within the range of not less than 0.2 mm and not more than 1.0 mm, and for the processing point speed to be within the range of not less than 80 mm/s and not more than 180 mm/s.

## Description

### [Technical Field]

Embodiments described below generally relate to a boron nitride plate surface treatment method, a method for producing a ceramic sintered body, and a method for producing a boron nitride plate.

### [Background Art]

A ceramic substrate is used as a circuit board to which a semiconductor element is mounted. Various ceramic substrates such as silicon nitride substrates, aluminum nitride substrates, aluminum oxide substrates, zirconium oxide substrates, Alusil substrates, etc., are used. Alusil substrates are substrates made by mixing zirconium oxide and aluminum oxide.

A production process of a ceramic substrate includes a raw material mixing process, a molding process, a degreasing process, and a sintering process. The raw material mixing process is a process of preparing a raw material paste by mixing a raw material powder and an organic binder. The molding process is a process of preparing a sheet-like compact from the raw material paste. The degreasing process is a process of removing the binder from the sheet-like compact. The sintering process is a process of sintering the sheet-like compact after degreasing.

In the degreasing process and the sintering process, the sheet-like compact is placed on a mounting plate. In International Publication No. 2013/146789 (Patent Literature 1), a boron nitride plate is used as a mounting plate. The sintering process of the ceramic substrate generally has a high temperature of about 1,600 to 2,000 °C. The boron nitride plate is used as the mounting plate due to excellent durability at high temperatures.

### [Prior Art Documents]

### [Patent Literature]

Patent Literature 1: International Publication No. 2013/146789

### [Summary of Invention]

### [Problem to be Solved by Invention]

When a boron nitride plate that is used as a mounting plate is repeatedly used, foreign matter attaches to the surface. The foreign matter attaches to the boron nitride plate from the ceramic sintered body. When foreign matter is present at the boron nitride plate, the flatness of the surface of the ceramic substrate placed on the boron nitride plate degrades. Therefore, conventionally, a process of removing the foreign matter of the surface of the boron nitride plate is regularly performed. Honing processing is used as the boron nitride plate surface treatment method. Honing processing is a method in which polishing is performed by spraying an abrasive grain. As a result, it is possible to remove the foreign matter, but the surface unevenness of the boron nitride plate increases. When the surface unevenness of the boron nitride plate increases, the surface unevenness of the ceramic substrate also increases. Therefore, a boron nitride plate surface treatment method is desirable in which the increase of the surface unevenness can be suppressed.

### [Means for Solving Problem]

A boron nitride plate surface treatment method according to an embodiment includes a first polishing process and a second polishing process. The first polishing process includes polishing a surface of a boron nitride plate by using a first polishing member having a grit within a range of not less than F120 and not more than F220 or within a range of not less than #240 and not more than #320. The second polishing process includes polishing the surface of the boron nitride plate by using a second polishing member having a grit within a range of not less than #360 and not more than #1000. The second polishing process is performed after the first polishing process.

### [Brief Description of Drawings]

[FIG. 1]

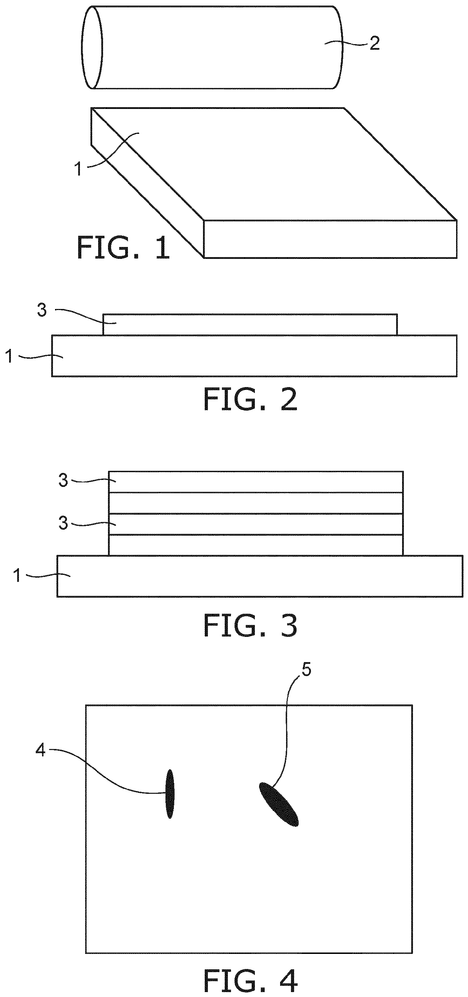

   FIG. 1 is a drawing showing an example of a boron nitride plate surface treatment method according to an embodiment.
[FIG. 2]
   FIG. 2 is a drawing showing an example of a ceramic compact placed on the boron nitride plate.
[FIG. 3]
   FIG. 3 is a drawing showing another example of a ceramic compact placed on the boron nitride plate.
[FIG. 4]
   FIG. 4 is a drawing showing an example of black whiskers of the boron nitride plate surface.
[FIG. 5]

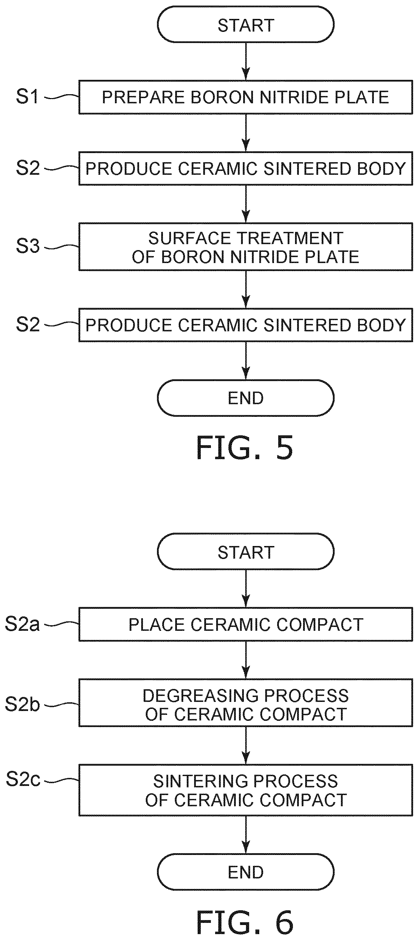

   FIG. 5 is a flowchart showing a processing method according to the embodiment.
[FIG. 6]
   FIG. 6 is a flowchart showing a method for producing a ceramic sintered body according to the embodiment.
[FIG. 7]

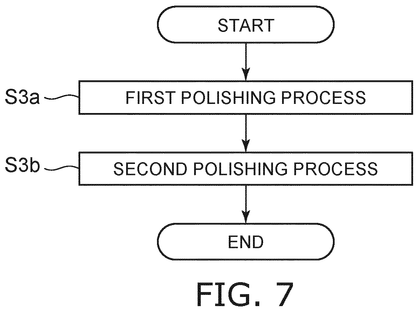

   FIG. 7 is a flowchart showing the boron nitride plate surface treatment method according to the embodiment.

### [Embodiments of Invention]

A boron nitride plate surface treatment method according to an embodiment includes a first polishing process and a second polishing process. The first polishing process includes polishing a surface of a boron nitride plate by using a first polishing member having a grit within a range of not less than F120 and not more than F220 or within a range of not less than #240 and not more than #320. The second polishing process includes polishing the surface of the boron nitride plate by using a second polishing member having a grit within a range of not less than #360 and not more than #1000. The second polishing process is performed after the first polishing process.

FIG. 1 shows an example of a boron nitride plate surface treatment method. In FIG. 1, 1 is a boron nitride plate, and 2 is an abrasive paper. The boron nitride plate 1 is made of a boron nitride sintered body.

FIG. 1 shows a square boron nitride plate 1. The shape of the boron nitride plate 1 is not limited to the illustrated example. The shape of the boron nitride plate 1 is square, rectangular, triangular, pentagonal, hexagonal, circular, elliptic, etc. The shape of the boron nitride plate 1 is arbitrary as long as a ceramic compact can be placed on the shape. The longitudinal and lateral sizes of the boron nitride plate 1 are appropriately selected according to the size and number of the ceramic compacts to be placed.

It is favorable for the thickness of the boron nitride plate 1 to be not less than 0.5 mm. When the thickness is less than 0.5 mm, there is a possibility that the strength of the boron nitride plate 1 may decrease. Although not particularly limited, it is favorable for the upper limit of the thickness of the boron nitride plate 1 to be not more than 10 mm. When the boron nitride plate 1 is greater than 10 mm, there is a possibility that the space for placing the ceramic compact inside the processing chamber of the degreasing process or the sintering process may be reduced. It is therefore favorable for the thickness of the boron nitride plate 1 to be within the range of not less than 0.5 mm and not more than 10 mm, or even within the range of not less than 0.8 mm and not more than 5 mm.

Examples of the polishing member include an abrasive paper, an abrasive cloth, an abrasive resin film, a grindstone, etc. **Abrasive** paper is a member in which an abrasive is adhered to the surface of a paper. An abrasive cloth is a member in which an abrasive is adhered to the surface of a cloth. An abrasive resin film is a member in which an abrasive is adhered to the surface of a resin film. A grindstone is a member in which abrasives are bonded to each other by a binder. An abrasive is used in each polishing member.

The size of the abrasive is expressed by the grit. The grit is represented by an "F" or "#" followed by a numeral. The abrasive becomes coarser as the grit numeral decreases. The grit is determined by the particle size of the abrasive. The grit is defined in JIS-R-6001-1 (2017) and JIS-R-6001-2 (2017). For abrasive paper, JIS-R-6252 (2006), JIS-R-6253 (2006), JIS-R-6111 (2020), JIS-R-6010 (2020), and JIS-R-6004 (2020) are referenced. These JIS correspond to ISO 3366 (1999), ISO 21948 (2001), ISO 21950 (2001), etc.

JIS Standards differentiate between the use of abrasives having macrogrits for grits of not more than F220, and the use of abrasives having microgrits for grits of not less than #240. The particle sizes of abrasives (abrasive grains) of not less than F120 and not more than F220 are determined by sieving. Also, the particle sizes of not less than #240 and not more than #1000 are determined by a sedimentation tube test.

For example, in a test sieve for the first stage of F120, the nominal opening of the sieve through which all of the abrasive passes is defined as 180 µm. The nominal opening of the test sieve of the fifth stage is defined as 63 µm. The nominal opening of the test sieve of the fifth stage is defined as a nominal opening such that the maximum mass fraction of the amount of the abrasive passing through the sieve of the fifth stage is 3%.

In the test sieve of the first stage of F220, the nominal opening of the sieve through which all of the abrasive passes is defined as 106 µm. The nominal opening of the test sieve of the third stage is defined as 53 µm. The nominal opening of the test sieve of the fourth stage is defined as 43 µm. The minimum mass fraction of the abrasive that must remain on the sieves of the third and fourth stages combined is defined as 60%.

The particle size of #240 to #1000 is determined by a sedimentation tube test. For example, for #240, the 50% cumulative height fraction particle size (d₅₀) is defined as 60 µm±4.0 µm. For #320, the 50% cumulative height fraction particle size (d₅₀) is defined as 46 µm±2.5 µm. For #360, the 50% cumulative height fraction particle size (d₅₀) is defined as 40 µm±2.0 µm. For #1000, the 50% cumulative height fraction particle size (d₅₀) is defined as 15.5 µm±1.0 µm.

The abrasive includes aluminum oxide, zirconium oxide, silicon carbide, etc. When the ceramic compact is an oxide ceramic, it is favorable for the abrasive to be aluminum oxide or zirconium oxide. When the ceramic compact is a nitride ceramic, it is favorable for the abrasive to be silicon carbide.

It is favorable for the polishing member to be abrasive paper. Abrasive paper also is called sandpaper or emery paper. Abrasive paper includes paper as the backing. When the backing is paper in the process of polishing the boron nitride plate 1 by pressing a polishing member, the polished surface of the boron nitride plate 1 is not easily affected by the unevenness of the backing. Therefore, a flat surface of the boron nitride plate 1 is easily obtained. When the backing is a cloth, the polished surface of the boron nitride plate 1 is affected by the diameter of the cloth fibers. Also, comparing abrasive paper and abrasive cloth, abrasive paper is inexpensive. Abrasive resin films or grindstones are members that are more expensive than abrasive cloth.

There are cases where abrasive paper and abrasive cloth are torn by polishing with a prescribed pressing amount. The replacement frequency of abrasive paper and the replacement frequency of abrasive cloth are about the same. It is therefore favorable to use abrasive paper. Hereinbelow. An example is described in which abrasive paper is used as the polishing member. When an abrasive cloth, abrasive resin film, or grindstone is used, the abrasive paper in the following description can be read as these polishing members.

FIG. 1 shows an example of an abrasive paper 2 adhered to a roller. Other than a roller, the abrasive paper 2 may be adhered to a rotary plate. Uneven polishing can be suppressed by mechanically performing the polishing process by using a mounting jig such as a roller or rotary plate. It is more favorable for the abrasive paper 2 that is used to be adhered to a roller than a rotary plate. By matching the length of the roller to the length of the boron nitride plate 1, uneven polishing can be further suppressed. Also, an abrasive belt may be configured using multiple rollers.

The boron nitride plate surface treatment method according to the embodiment includes the first and second polishing processes. The first polishing process is a process of polishing the surface of the boron nitride plate by using a first abrasive paper. First, the surface is polished with the first abrasive paper having a grit within the range of not less than F120 and not more than F220 or not less than #240 and not more than #320. The first abrasive paper is an example of the first polishing member. When the grit is lower than F120, the abrasive is coarse, and so polishing marks are easily formed on the surface of the boron nitride plate 1. When the grit is higher than #320, the abrasive is fine, and so it takes time to polish the surface of the boron nitride plate 1. It is therefore favorable for the grit of the first abrasive paper used in the first polishing process to be within the range of not less than F120 and not more than F220 or within the range of not less than #240 and not more than #320. More favorably, the grit of the first abrasive paper is within the range of not less than #220 and not more than #280.

The second polishing process is a process of polishing the surface of the boron nitride plate 1 by using a second abrasive paper. The surface is polished with the second abrasive paper having a grit within the range of not less than #360 and not more than #1000 after the first polishing process. The second abrasive paper is an example of the second polishing member. When the grit is lower than #360, the second polishing process is the same as the first polishing process. When the grit is higher than #1000, the abrasive is fine, and it takes time to polish the surface of the boron nitride plate 1. It is therefore favorable to include the grit of the second abrasive paper used in the second polishing process to be within the range of not less than #360 and not more than #1000, or even within the range of not less than #400 and not more than #800.

The second polishing process is a process of further polishing the surface subjected to the first polishing process. That is, the two polishing processes of the first and second polishing processes are performed on the surface of the boron nitride plate 1. The grit of the abrasive paper used in the second polishing process is higher than the grit of the abrasive paper used in the first polishing process. The second polishing process that uses the fine abrasive paper is performed after the first polishing process that uses the coarse abrasive paper. As a result, the flatness of the boron nitride plate 1 can be improved.

In the first polishing process, it is favorable for the pressing amount of the first abrasive paper to be within the range of not less than 0.2 mm and not more than 1.0 mm, and for the processing point speed to be within the range of not less than 80 mm/s and not more than 180 mm/s. The pressing amount of the abrasive paper is the force pressing the abrasive paper 2 perpendicularly onto the boron nitride plate 1. A roller on which the abrasive paper 2 is wound is called a polishing roller. The polishing roller is placed on the boron nitride plate 1; and the distance of the pressing from there is called the pressing amount. When the pressing amount is within the range of not less than 0.2 mm and not more than 1.0 mm, both the flatness and the polishing efficiency can be realized. When the pressing amount is less than 0.2 mm, there is a possibility that the polishing efficiency may decrease because the pressing force is insufficient. When the pressing amount is greater than 1.0 mm, there is a possibility that the unevenness of the polished surface may increase due to excessive polishing. Therefore, in the first polishing process, it is favorable for the pressing amount of the abrasive paper to be within the range of not less than 0.2 mm and not more than 1.0 mm, or even within the range of not less than 0.3 mm and not more than 0.7 mm.

The pressing amount can be adjusted by the hardness of the roller main body of the polishing roller, the pressing pressure, etc. The main body of the polishing roller is the roller main body to which the abrasive paper is mounted. Various materials of the roller main body such as rubber, metal, ceramic, etc., may be used. It is favorable for the roller main body to be rubber. When the roller main body is rubber, damage of the ceramic substrate can be suppressed. When the roller main body is rubber, it is favorable for the hardness of the rubber to be within the range of not less than 10° and not more than 90°. The method for measuring the rubber hardness is defined in JIS-K-6253-3 (2012). JIS-K-6253-3 corresponds to ISO 7619-1 (2010). Also, it is favorable for the pressing pressure to be within the range of not less than 10 N (newtons) and not more than 200 N.

The processing point speed is the distance that the abrasive paper moves per unit time. The unit "mm/s" represents the distance (mm) that the abrasive paper moves in 1 second. For example, when abrasive paper is wound on a roller, the unit "mm/s" indicates the rotational speed of the roller. When abrasive paper is mounted to the rotary plate, the unit "mm/s" is the rotational speed of the rotary plate. The processing point speed is a parameter for controlling the stress of the abrasive paper 2 on the boron nitride plate 1. When the processing point speed is within the range of not less than 80 mm/s and not more than 180 mm/s, the processing efficiency can be increased. When the processing point speed is less than 80 mm/s, there is a possibility that the processing efficiency may decrease. When the processing point speed is faster than 180 mm/s, there is a possibility that processing fluctuation may occur, and the unevenness of the surface of the boron nitride plate 1 may increase. It is therefore favorable for the processing point speed to be within the range of not less than 80 mm/s and not more than 180 mm/s, or even within the range of not less than 100 mm/s and not more than 150 mm/s. Also, a synergistic effect can be obtained by adjusting a combination of the processing point speed and the pressing amount of the abrasive paper.

In the second polishing process, it is favorable for the pressing amount of the abrasive paper to be within the range of not less than 0.2 mm and not more than 1.0 mm, and for the processing point speed to be within the range of not less than 20 mm/s and not more than 100 mm/s. It is favorable for the pressing amount of the second polishing process to be within the range of not less than 0.2 mm and not more than 1.0 mm, or even within the range of not less than 0.3 mm and not more than 0.7 mm. It is favorable for the processing point speed of the second polishing process to be within the range of not less than 20 mm/s and not more than 100 mm/s, or even within the range of not less than 30 mm/s and not more than 80 mm/s. In the second polishing process as well, the processing efficiency can be increased by controlling the pressing amount and the processing point speed.

It is favorable for the processing point speed of the first polishing process to be faster than the processing point speed of the second polishing process. The grit of the abrasive paper used in the first polishing process is lower than the grit of the abrasive paper used in the second polishing process. Therefore, the first polishing process has coarser processing than the second polishing process. By increasing the processing point speed of the first polishing process, coarse processing of the surface can be performed in a shorter period of time while reducing the unevenness of the surface of the boron nitride plate. Also, by performing coarse processing of the surface by the first polishing process, the finishing of the surface is easily performed with an abrasive paper having a high grit number in the second polishing process. At this time, a flatter surface can be obtained by reducing the processing point speed.

A flat surface can be obtained by performing a polishing process such as that described above on the boron nitride plate 1. "Flat surface" refers to no recess of 40 µm or more in depth. Also, a flat surface having no needle-like silicon nitride crystal particles at the surface of the boron nitride plate 1 can be obtained. Also, a third polishing process may be performed after the second polishing process as necessary. In the third polishing process, a polishing member having a higher grit number than the second polishing process is used.

The boron nitride plate 1 is used when performing the degreasing process or sintering process of the ceramic compact. In these processes, the ceramic compact is placed on the boron nitride plate 1. The degreasing process and the sintering process also are heating processes. When the ceramic compact is heated, grain growth of the ceramic raw material powder, contraction of the compact, etc., occur. When a recess of 40 µm or more in depth is in the surface of the boron nitride plate 1, a protrusion of 40 µm or more is easily formed in the obtained ceramic sintered body. When the ceramic sintered body is plate-shaped, it is unfavorable to form a protrusion of 40 µm or more. A plate-shaped ceramic sintered body is a so-called ceramic substrate. A ceramic circuit board can be formed by bonding a ceramic substrate to a metal plate. Also, a pressure-bonded module structure in which a semiconductor element is pressure-bonded to a ceramic substrate can be formed. The ceramic substrate that is used in the pressure-bonded module is used as a single plate to which a metal plate is not bonded.

In a ceramic circuit board, a ceramic substrate and a metal plate are bonded using a brazing material layer. A large protrusion in the surface of the ceramic substrate unfavorably affects the bonding between the ceramic substrate and the metal plate. Also, a large protrusion in the surface of the ceramic substrate used in a pressure-bonded module unfavorably affects the adhesion between the ceramic substrate and the semiconductor element. It is therefore favorable for there to be no protrusion of 40 µm or more in the surface of the ceramic substrate. In other words, the boron nitride plate 1 according to the embodiment is favorably used in a process for obtaining a ceramic substrate.

For this reason as well, it is favorable for there to be no recess of 40 µm or more in depth in the surface of the boron nitride plate. Also, recesses of 40 µm or more in depth are formed mainly by the polishing process. Therefore, a recess of 40 µm or more in depth in the boron nitride plate 1 surface also is called a polishing mark. Recesses of 40 µm or more in depth in the boron nitride plate 1 surface are measured using a three-dimensional profilometer. The entire surface of the boron nitride plate 1 at the side on which the ceramic compact is placed is measured. The one-shot 3D profilometer VR series made by Keyence or an equivalent device is used as the three-dimensional profilometer.

"No recess of 40 µm or more in depth in the surface of the boron nitride plate" refers to no recess of 40 µm or more in depth in a location at which the ceramic compact is placed. In other words, a recess of 40 µm or more in depth may be present at a location at which the ceramic compact is not placed. Also, it is most favorable for there to be no recess of 40 µm or more in depth in the entire surface of the boron nitride plate. As a result, the placement location of the ceramic compact is not constrained.

It is favorable for there to be no needle-like silicon nitride crystal particles at the surface of the boron nitride plate 1. Grain growth of the ceramic raw material powder occurs as the sintering process of the ceramic compact is performed. In particular, in the silicon nitride compact, round silicon nitride powder becomes slender silicon nitride crystal particles. The slender silicon nitride crystal particles grow to have an aspect ratio of not less than 2. The silicon nitride crystal particles that have an aspect ratio of not less than 2 are called needle-like silicon nitride crystal particles. The slender silicon nitride crystal particles are mainly made of β-silicon nitride crystal particles. The needle-like silicon nitride crystal particles that are subjected to grain growth in the sintering process become protrusions at the silicon nitride sintered body surface. Needle-like silicon nitride crystal particles appear at the surface of the boron nitride plate 1 due to the protrusions sticking into the boron nitride plate 1. The needle-like silicon nitride crystal particles are a hard substance. The first polishing process and the second polishing process also are effective for removing the needle-like silicon nitride crystal particles at the surface of the boron nitride plate 1. In particular, by using an abrasive paper including an abrasive made of silicon carbide, the needle-like silicon nitride crystal particles can be efficiently removed. In other words, the boron nitride plate surface treatment method according to the embodiment is suited to the boron nitride plate used in the degreasing process or the sintering process of the silicon nitride compact.

The presence or absence of needle-like silicon nitride crystal particles at the surface of the boron nitride plate 1 can be analyzed by energy dispersive X-ray analysis (EDX). It is sufficient to check the presence or absence of silicon at the surface of the boron nitride plate 1. Also, the presence or absence of needle-like silicon nitride crystal particles can be checked by observing the locations at which the silicon is detected with a scanning electron microscope (SEM). For example, when the boron nitride plate does not include a sintering aid, the presence or absence of needle-like silicon nitride crystal particles may be checked by only EDX analysis. When the boron nitride plate includes a sintering aid, the presence or absence of needle-like silicon nitride crystal particles is checked by combining EDX and SEM. The presence or absence of needle-like silicon nitride crystal particles is checked by analyzing the entire surface of the boron nitride plate at the side on which the ceramic compact is placed.

The Keyence VE9800 or an equivalent device is used in the SEM-EDX. When observing, a magnification of 200 times and an applied voltage of 12 kV are set. Also, in the SEM-EDX, needle-like silicon nitride crystal particles are determined not to be present at locations at which the content of the silicon nitride is determined to be not more than the detection limit. The silicon amount may be simply determined. It is effective for the needle-like nitride crystal particles not to be present at the location at which the ceramic compact is placed. The degree of freedom of the location at which the ceramic compact is placed is increased by the needle-like nitride crystal particles not being present at the entire surface of the boron nitride plate. It is therefore favorable for the needle-like nitride crystal particles not to be present at the entire surface of the boron nitride plate.

FIG. 4 shows an example of a needle-like silicon nitride crystal particle and a polishing mark. In FIG. 4, 4 is a needle-like silicon nitride crystal particle, and 5 is a polishing mark. When the surface measured by the three-dimensional profilometer is color-mapped, the needle-like silicon nitride crystal particle 4 and the polishing mark 5 appear to have different colors from the other portions due to the difference between highs and lows. For example, when measured using the default setting of the one-shot 3D profilometer VR series made by Keyence, the needle-like silicon nitride crystal particle 4 appears red because the needle-like silicon nitride crystal particle 4 is a protrusion. Also, the polishing mark 5 appears blue because the polishing mark 5 is a recess.

By performing the surface treatment method according to the embodiment on the boron nitride plate 1, the warp amount of the boron nitride plate 1 can be set to be not more than 0.1 mm. Also, by performing the boron nitride plate surface treatment method according to the embodiment on the boron nitride plate 1, the maximum height roughness Rz of the boron nitride plate 1 can be set to be not more than 40 µm. The warp amount of the boron nitride plate 1 is the flatness of JIS-B-0621 (1984). The maximum height roughness Rz is defined in JIS-B-0601 (2013). The warp amount and the maximum height roughness Rz also are measured using the three-dimensional profilometer. JIS-B-0601 (2013) corresponds to ISO 4287 (2009).

When the warp amount of the boron nitride plate 1 is not more than 0.1 mm, the warp amount of the obtained ceramic sintered body also can be reduced. Also, when the maximum height roughness Rz of the boron nitride plate 1 is not more than 40 µm, the maximum value of the surface protrusions of the obtained ceramic sintered body can be set to be not more than 20 µm. The warp amount and surface protrusions of the obtained ceramic sintered body can be reduced by controlling the warp amount and maximum height roughness Rz of the boron nitride plate 1. Decreasing the warp amount and reducing the surface protrusions are effective for producing a ceramic substrate having a thickness of not more than 1 mm. In other words, the surface treatment method according to the embodiment is favorable for the boron nitride plate 1 for producing a ceramic substrate having a thickness of not more than 1 mm. Also, by setting the maximum height roughness Rz of the boron nitride plate 1 to be not more than 40 µm, the sticking by needle-like silicon nitride crystal particles can be prevented. It is therefore favorable for the warp amount of the boron nitride plate to be not more than 0.1 mm, or even not more than 0.06 mm. It is favorable for the maximum height roughness Rz of the boron nitride plate to be not more than 40 µm, or even not more than 20 µm. Also, the surface of the boron nitride plate 1 degrades when the degreasing process or the sintering process is performed using the boron nitride plate. It is effective to perform the surface treatment method according to the embodiment when degradation of the boron nitride plate 1 has begun or before signs of degradation appear. The yield of the ceramic substrate can be increased thereby.

A boron nitride plate on which a surface treatment method such as that described above is performed can be used in a method for producing a ceramic sintered body. The production process of the ceramic sintered body includes a raw material mixing process, a molding process, a degreasing process, a sintering process, etc. The raw material mixing process is a process of preparing a raw material paste by mixing a raw material powder and an organic binder. The molding process is a process of preparing a ceramic compact from the raw material paste. The degreasing process is a process of removing the binder from the ceramic compact. The sintering process is a process of sintering the ceramic compact after degreasing. The degreasing process and the sintering process are performed after placing the ceramic compact on the boron nitride plate 1. FIGS. 2 and 3 show examples of the ceramic compact placed on the boron nitride plate.

In FIGS. 2 and 3, 1 is a boron nitride plate, and 3 is a ceramic compact. FIG. 2 shows an example of a single-layer ceramic compact placed on the boron nitride plate. FIG. 3 shows an example of ceramic compacts stacked with each other and placed on the boron nitride plate. A not-illustrated weight board may be placed on the ceramic compact 3. A boron nitride plate may be used as the weight board. A structure may be used in which the boron nitride plate 1 and the ceramic compact 3 are alternately stacked as in boron nitride plate 1/ceramic compact 3/boron nitride plate 1/ceramic compact 3. When the ceramic compacts 3 are stacked with each other, a release agent may be placed between the ceramic compacts 3. Using the weight board also provides the effect of suppressing warp of the ceramic sintered body. Similarly, the effect of suppressing warp of the ceramic sintered body also is obtained by alternately stacking the boron nitride plate 1 and the ceramic compact 3. Warp suppression is favorable for producing a plate-shaped ceramic sintered body. Herein, a plate-shaped ceramic sintered body is called a ceramic substrate.

Examples of ceramic substrates include silicon nitride substrates, aluminum nitride substrates, aluminum oxide substrates, zirconium oxide substrates, Alusil substrates, etc. Silicon nitride substrates and aluminum nitride substrates are called nitride ceramic substrates. Also, aluminum oxide substrates, zirconium oxide substrates, and Alusil substrates are called oxide ceramic substrates. The classification is performed according to the components accounting for not less than 50 mass%. A component that is not less than 50 mass% is taken to be a major component. For example, a ceramic substrate that includes not less than 50 mass% silicon nitride is a silicon nitride substrate.

A method for producing the ceramic substrate will now be described as an example. The production processes of the ceramic substrate include a raw material mixing process, a molding process, a degreasing process, and a sintering process. In the raw material mixing process, a raw material powder is prepared in which the ceramic powder of the major component and a sintering aid powder are mixed. The raw material paste is prepared by mixing the organic binder into the raw material powder. In the molding process, a sheet-like ceramic compact is prepared from the raw material paste. Examples of the method for preparing the sheet-like ceramic compact include a doctor blade method, molding with a mold, injection molding, etc. When a ceramic substrate having a thickness of not more than 1 mm is produced, it is favorable to use the doctor blade method. The sheet-like ceramic compact is cut as necessary.

The boron nitride plate on which the surface treatment method according to the embodiment is performed can be used as a member for placing the ceramic compact in the degreasing process or the sintering process. The boron nitride plate may be used in both the degreasing process and the sintering process. That is, the ceramic compact can be placed on the boron nitride plate; and the sintering process can be performed as-is after the degreasing process is performed.

The degreasing process is a process of removing the binder from the sheet-like ceramic compact. Herein, the sheet-like ceramic compact is called simply the ceramic compact 3. The ceramic compact 3 is placed on the boron nitride plate 1. It is favorable to perform the degreasing process within the range of not less than 350 °C and not more than 600 °C. The organic binder is removed by the degreasing process.

The sintering process is a process of sintering the ceramic compact 3 after degreasing. It is favorable to perform the sintering process within the range of not less than 1,600 °C and not more than 2,000 °C. Examples of the atmosphere of the sintering process include a vacuum, ambient air, an inert atmosphere, etc. The pressure in the sintering process may be atmospheric pressure or may be pressurized. When the sintering process is performed, grain growth of the ceramic powder occurs. When making the silicon nitride substrate, grain growth causes round silicon nitride powders to become slender silicon nitride crystal particles. The aspect ratio of the slender silicon nitride crystal particles is not less than 1.5, or even not less than 2. Herein, a silicon nitride crystal particle that has an aspect ratio of not less than 1.5 is called a needle-like silicon nitride crystal particle.

The needle-like silicon nitride crystal particles subjected to grain growth by the sintering process become protrusions at the surface of the silicon nitride sintered body. The needle-like silicon nitride crystal particles are present at the boron nitride plate surface due to the protrusions sticking into the boron nitride plate 1. When a weight board is placed on the silicon nitride compact, the adhesion between the boron nitride plate 1 and the silicon nitride compact is improved. The improvement of the adhesion is effective to prevent warp of the silicon nitride substrate. On the other hand, the needle-like silicon nitride crystal particles easily stick into the boron nitride plate 1. When needle-like silicon nitride crystal particles are present at the surface of the boron nitride plate 1, there is a possibility that the obtained silicon nitride substrate may be unfavorably affected, and the yield may be reduced. The adhesion is improved even when the silicon nitride compacts are stacked with each other, or a stacked structure of the boron nitride plate 1 and the ceramic compact 3 is used. On the other hand, similarly, the needle-like silicon nitride crystal particles easily stick into the boron nitride plate.

By performing the surface treatment according to the embodiment on the boron nitride plate, a surface of the boron nitride plate 1 into which needle-like silicon nitride crystal particles do not stick can easily be obtained. When there are recesses in the surface of the boron nitride plate 1, needle-like silicon nitride crystal particles easily stick into such a region. By setting the maximum height roughness Rz of the boron nitride plate to be not more than 40 µm, a surface into which needle-like silicon nitride crystal particles do not stick can easily be obtained. When it is difficult for needle-like silicon nitride particles to stick, the boron nitride plate 1 can be repeatedly used. The frequency of the surface treatment of the boron nitride plate can be reduced, which leads to an efficiency increase and a cost reduction.

When making an aluminum nitride substrate, an aluminum oxide substrate, and a zirconium oxide substrate, grain growth of the crystal occurs similarly when making a silicon nitride substrate. However, crystal particles having an aspect ratio of less than 2 are a major part of such substrates. Therefore, compared to a silicon nitride substrate, the likelihood of needle-like crystal particles sticking into the boron nitride plate 1 is low. In other words, the surface treatment method according to the embodiment and the method for producing the ceramic sintered body using the surface treatment method according to the embodiment are favorable for producing a silicon nitride substrate.

The obtained ceramic sintered body is plate-shaped; and it is favorable for the warp amount to be not more than 0.1 mm, and for the maximum value of the surface protrusions to be not more than 20 µm. According to the method for producing the ceramic sintered body described above, the warp amount of the plate-shaped ceramic sintered body can be set to be not more than 0.1 mm. Also, the maximum value of the surface protrusions of the plate-shaped ceramic sintered body can be set to be not more than 20 µm. The plate-shaped ceramic sintered body refers to a ceramic substrate. The thicknesses of many ceramic substrates are not more than 1 mm. When a silicon nitride substrate is used as the ceramic substrate, the thickness of the silicon nitride substrate can be reduced to be not less than 0.1 mm and not more than 0.4 mm. The method for producing the ceramic sintered body according to the embodiment can be used in a ceramic substrate having a thickness of not more than 1 mm, or even not more than 0.4 mm; and the warp amount and the surface protrusions can be reduced. Therefore, the yield can be increased. Also, the surface treatment frequency of the boron nitride plate 1 can be reduced, and so a cost reduction also is possible.

The warp amount and maximum value of surface protrusions of the silicon nitride substrate also are measured using the three-dimensional profilometer. Although the method for producing the silicon nitride substrate is described above as an example, the production method that is described also is applicable similarly to the other ceramic substrates.

FIG. 5 is a flowchart showing a processing method according to the embodiment. As shown in FIG. 5, first, a boron nitride plate is prepared (step S1). For example, the boron nitride plate is obtained by sintering a molded body including a boron nitride powder. A commercially available boron nitride plate may be used. Then, a ceramic sintered body is produced using the boron nitride plate (step S2). Surface treatment of the boron nitride plate is performed after producing the ceramic sintered body (step S3). Subsequently, a ceramic sintered body is again produced using the processed boron nitride plate (step S2).

FIG. 6 is a flowchart showing a method for producing the ceramic sintered body according to the embodiment. As shown in FIG. 6, in the production of the ceramic sintered body (step S2), the ceramic compact is placed on the boron nitride plate (step S2a). A degreasing process and a sintering process are performed on the ceramic compact (steps S2b and S2c). As a result, a ceramic sintered body is obtained.

FIG. 7 is a flowchart showing a boron nitride plate surface treatment method according to the embodiment. As shown in FIG. 7, a first polishing process is performed on the boron nitride plate utilized to produce the ceramic sintered body (step S3a). Then, a second polishing process is performed on the boron nitride plate (step S3b). In the production of the ceramic sintered body (step S2), needle-like silicon nitride crystal particles stick into the surface of the boron nitride plate. The needle-like silicon nitride crystal particles can be removed more effectively in the first and second polishing processes. According to the first and second polishing processes, the maximum height roughness Rz of the boron nitride plate can be reduced, and the warp amount can be reduced.

In the flowchart shown in FIG. 5, the production of the ceramic sintered body (step S2) is repeated multiple times as appropriate. The production of the ceramic sintered body and the surface treatment of the boron nitride plate may be alternately repeated multiple times. By performing the surface treatment of the boron nitride plate, the yield of the ceramic sintered body that is subsequently produced can be increased. Also, the surface treatment of the boron nitride plate (step S3) may be performed between the preparation of the boron nitride plate (step S1) and the production of the ceramic sintered body (step S2) as necessary.

When processing the surface of the boron nitride plate 1, it is not always necessary to process the entire surface. The range in which the surface treatment is performed is modifiable as appropriate as long as at least the region of the surface of the boron nitride plate 1 at which the ceramic compact is placed is processed. Also, in the production of the ceramic sintered body, there is a possibility that needle-like silicon nitride crystal particles may stick into the back surface of the boron nitride plate 1 as well when the boron nitride plate 1 is placed on the ceramic compact. Therefore, when the boron nitride plate 1 is placed on **the ceramic** compact, it is favorable to perform the surface treatment method according to the embodiment for the back surface of the boron nitride plate 1 as well.

### (Examples)

### (Examples 1 to 5 and comparative examples 1 to 3)

First, the boron nitride plate was prepared. The longitudinal dimension of the boron nitride plate was 240 mm, the lateral dimension was 180 mm, and the thickness was 1.5 mm. A silicon nitride compact was prepared as a ceramic compact. The silicon nitride compact was formed by a doctor blade method; and a sheet-like compact was prepared. The silicon nitride compact was placed on the boron nitride plate; and a degreasing process and a sintering process were performed. The degreasing process was performed within the range of not less than 350 °C and not more than 600 °C. The sintering process was performed within the range of not less than 1,600 °C and not more than 2,000 °C. The obtained silicon nitride sintered body was moved, another silicon nitride compact was placed on the same boron nitride plate, and the degreasing process and the sintering process were performed. These processes were repeated five times, with the degreasing process and the sintering process as one set. As a result, multiple locations at which needle-like silicon nitride crystal particles stuck into the surface of the boron nitride plate were observed.

The surface treatment shown in Table 1 was performed on the boron nitride plate into which the needle-like silicon nitride crystal particles stuck. Abrasive paper was used in the examples 1 to 4 and the comparative examples 2 to 3. The abrasive was made of silicon carbide. An abrasive cloth was used in the example 5. The abrasive was made of silicon carbide. The surface treatment was performed by winding the abrasive paper or abrasive cloth onto a roller main body. In Table 1, the symbol F of the grits 120 to 220 and the symbol # of the grits 240 to 1000 are omitted. Surface treatment was not performed in the comparative example 1. A rubber roller having a hardness of not less than 10° and not more than 90° was used as the roller main body. The pressing amount was adjusted by setting the pressing pressure to be within the range of not less than 10 N and not more than 200 N.

**[Table 1]**

| | First polishing process | | | Second polishing process | | |
|---|---|---|---|---|---|---|
| | Grit | Pressing amount (mm) | Processing point speed (mm/s) | Grit | Pressing amount (mm) | Processing point speed (mm/s) |
| Example 1 | 220 | 0.4 | 100 | 800 | 0.5 | 40 |
| Example 2 | 280 | 0.6 | 140 | 500 | 0.7 | 70 |
| Example 3 | 150 | 0.8 | 170 | 360 | 0.4 | 80 |
| Example 4 | 150 | 0.3 | 60 | 1000 | 0.8 | 130 |
| Example 5 | 240 | 0.5 | 120 | 800 | 0.6 | 60 |
| Comparative example 1 | - | - | - | - | - | - |
| Comparative example 2 | 220 | 0.4 | 100 | - | - | - |
| Comparative example 3 | 800 | 0.5 | 40 | - | - | - |

The surface treatment conditions of examples 1 to 5 were set in ranges satisfying the conditions of the boron nitride plate surface treatment method according to the embodiment. Surface treatment was not performed in the comparative example 1. The polishing process was performed only once in the comparative examples 2 and 3. That was, the second polishing process was not performed in the comparative examples 2 and 3.

After performing the surface treatment, checking of the presence or absence of needle-like silicon nitride crystal particles at the surface of the boron nitride plate, measurement of the warp amount of the boron nitride plate, and checking of the presence or absence of locations at which the maximum height roughness Rz was greater than 40 µm were performed. The flatness of JIS-B-0621 (1984) was used as the warp amount of the boron nitride plate. The maximum height roughness Rz is a value in accordance with JIS-B-0601 (2013). The warp amount of the boron nitride plate and the maximum height roughness Rz were measured using a three-dimensional profilometer. The one-shot 3D profilometer VR series made by Keyence was used as the three-dimensional profilometer. The entire surface on which the ceramic compact was placed was measured using the three-dimensional profilometer. The presence or absence of needle-like silicon nitride crystal particles at the surface of the boron nitride plate was measured using EDX and SEM. For these measurements as well, the entire surface on which the ceramic compact was placed was measured. The Keyence VE9800 was used for the SEM-EDX. The results are shown in Table 2.

**[Table 2]**

| | Boron nitride plate | | |
|---|---|---|---|
| | Warp amount (mm) | Presence or absence of needle-like silicon nitride crystal particles | Presence or absence of location having Rz greater than 40 µm |
| Example 1 | ≦0.1 | None | None |
| Example 2 | ≦0.1 | None | None |
| Example 3 | ≦0.1 | None | None |
| Example 4 | ≦0.1 | None | 2 locations |
| Example 5 | ≦0.1 | None | None |
| Comparative example 1 | 0.3 | 10 locations | 10 locations |
| Comparative example 2 | ≦ 0.1 | 4 locations | 7 locations |
| Comparative example 3 | ≦0.1 | 5 locations | None |

In the examples 1 to 3 and the example 5, the warp amount of the boron nitride plate was not more than 0.1 mm. Needle-like silicon nitride crystal particles and locations at which the maximum height roughness Rz was greater than 40 µm were not observed. Therefore, it was found that the boron nitride plates according to the examples 1 to 3 and the example 5 had maximum height roughnesses Rz of not more than 40 µm. In the example 4, recesses at which the maximum height roughness Rz was greater than 40 µm were observed at two locations. The cause is considered to be that in the example 4, the processing point speed was outside the favorable range.

Because surface treatment was not performed in the comparative example 1, all of the characteristics were poor. The polishing process was performed only once in the comparative examples 2 and 3. Therefore, the warp amount was reduced, but there were needle-like silicon nitride crystal particles and locations at which the maximum height roughness Rz was greater than 40 µm. Accordingly, it was found that it is effective to perform both the first and second polishing processes as the surface treatment of the boron nitride plate.

Then, silicon nitride substrates were produced using the boron nitride plates of the examples and the comparative examples. The thicknesses of the obtained silicon nitride substrates were set to 0.32 mm. Sheet-like silicon nitride compacts were placed respectively on the boron nitride plates of the examples and the comparative examples. Ten sheet-like silicon nitride compacts were overlaid on each boron nitride plate; and weight boards were placed on the sheet-like silicon nitride compacts. A degreasing process at 400 °C and a sintering process at 1,800 °C were performed. After repeating the set of the placement of the sheet-like silicon nitride compact, the degreasing process, and the sintering process five times, the warp amount of the boron nitride plate was measured, and the presence or absence of needle-like silicon nitride crystal particles and the presence or absence of locations at which the maximum height roughness Rz was greater than 40 µm were checked. Also, after repeating the set eight times as well, the warp amount of the boron nitride plate was measured, and the presence or absence of needle-like silicon nitride crystal particles and the presence or absence of locations at which the maximum height roughness Rz was greater than 40 µm were checked. The results are shown in Table 3.

**[Table 3]**

| | 5th time | | | 8th time | | |
|---|---|---|---|---|---|---|
| | Boron nitride plate | | | Boron nitride plate | | |
| | Warp amount (mm) | Presence or absence of needle-like silicon nitride crystal particles | Presence or absence of location having Rz greater than 40 µm | Warp amount (mm) | Presence or absence of needle-like silicon nitride crystal particles | Presence or absence of location having Rz greater than 40 µm |
| Example 1 | ≦ 0.1 | None | None | ≦0.1 | None | None |
| Example 2 | ≦0.1 | None | None | ≦0.1 | None | None |
| Example 3 | ≦0.1 | None | None | ≦0.1 | None | None |
| Example 4 | ≦ 0.1 | None | 2 locations | ≦0.1 | 1 locations | 2 locations |
| Example 5 | ≦0.1 | None | None | ≦0.1 | None | None |
| Comparative example 1 | 0.3 | 10 locations | 10 locations | 0.5 | 15 locations | 10 locations |
| Comparative example 2 | ≦0.1 | 5 locations | 7 locations | 0.3 | 8 locations | 7 locations |
| Comparative example 3 | ≦0.1 | 5 locations | None | 0.2 | 7 locations | None |

It can be seen from Table 3 that for the boron nitride plates according to the examples on which surface treatment was performed, the degradation of the surface was reduced even when the degreasing process and the sintering process were repeated. In particular, for the boron nitride plates according to the examples 1 to 3 and the example 5, the degradation of the surface was greatly reduced, which provided excellent durability. Therefore, the surface treatment frequency of the boron nitride plate can be reduced.

Then, the warp amount of the silicon nitride substrate and the maximum height roughness Rz were measured. Silicon nitride substrates of which the warp amount was not more than 0.1 mm and the maximum height roughness Rz was not more than 20 µm were taken to be "good". The warp amount of the silicon nitride substrate and the maximum height roughness Rz also were measured using the three-dimensional profilometer (the one-shot 3D profilometer VR series made by Keyence). One thousand silicon nitride substrates were made for each example and each comparative example; and the good part percentage was determined. The results are shown in Table 4.

**[Table 4]**

| | Good part percentage (%) |
|---|---|
| Example 1 | 100 |
| Example 2 | 100 |
| Example 3 | 100 |
| Example 4 | 97 |
| Example 5 | 100 |
| Comparative example 1 | 73 |
| Comparative example 2 | 81 |
| Comparative example 3 | 85 |

It can be seen from Table 4 that according to the method for producing the silicon nitride substrate according to the examples, the yield of the silicon nitride substrate was good. Also, it was found that the degradation was low even when the boron nitride plate was repeatedly used. A cost reduction effect was obtained in this respect as well.

Embodiments of the invention include the following features.

### Note 1

A boron nitride plate surface treatment method, comprising:
a first polishing process of polishing a surface of a boron nitride plate by using a first polishing member having a grit within a range of not less than F120 and not more than F220 or within a range of not less than #240 and not more than #320; and
a second polishing process of polishing the surface by using a second polishing member having a grit within a range of not less than #360 and not more than #1000 after the first polishing process.

### Note 2

The surface treatment method according to Note 1, wherein
the first polishing member and the second polishing member are abrasive papers.

### Note 3

The boron nitride plate surface treatment method according to any one of Notes 1 to 2, wherein
in the first polishing process, a pressing amount of the first polishing member is not less than 0.2 mm and not more than 1.0 mm, and a processing point speed is not less than 80 mm/s and not more than 180 mm/s.

### Note 4

The boron nitride plate surface treatment method according to any one of Notes 1 to 3, wherein
in the second polishing process, a pressing amount of the second polishing member is not less than 0.2 mm and not more than 1.0 mm, and a processing point speed is not less than 20 mm/s and not more than 100 mm/s.

### Note 5

The boron nitride plate surface treatment method according to any one of Notes 2 to 4, wherein
a processing point speed in the first polishing process is faster than a processing point speed in the second polishing process.

### Note 6

The boron nitride plate surface treatment method according to any one of Notes 1 to 5, wherein
the surface after the second polishing process has no needle-like silicon nitride crystal particles, and has no recesses of 40 µm or more in depth.

### Note 7

The boron nitride plate surface treatment method according to any one of Notes 1 to 6, wherein
a warp amount of the boron nitride plate after the second polishing process is not more than 0.1 mm, and
a maximum height roughness Rz of the boron nitride plate after the second polishing process is not more than 40 µm.

### Note 8

A method for producing a ceramic sintered body, the method comprising:
placing a ceramic compact on the surface processed by the surface treatment method according to any one of Notes 1 to 7;
degreasing the ceramic compact; and
sintering the degreased ceramic compact.

### Note 9

The method for producing the ceramic sintered body according to Note 8, wherein
the obtained ceramic sintered body is plate-shaped.

### Note 10

The method for producing the ceramic sintered body according to any one of Notes 8 to 9, wherein
the obtained ceramic sintered body is plate-shaped,
a warp amount of the ceramic sintered body is not more than 0.1 mm, and
a maximum height roughness Rz of the ceramic sintered body is not more than 20 µm.

### Note 11

The method for producing the ceramic sintered body according to any one of Notes 8 to 10, wherein
the ceramic sintered body is a silicon nitride sintered body.

### Note 12

A method for producing a boron nitride plate, the method comprising:
preparing the boron nitride plate made of a boron nitride sintered body;
a first polishing process of polishing a surface of the boron nitride plate by using a first polishing member within a range of not less than F120 and not more than F220 or within a range of not less than #240 and not more than #320; and
a second polishing process of polishing the surface by using a second polishing member within a range of not less than #360 and not more than #1000 after the first polishing process.

While certain embodiments of the inventions have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. Also, the embodiments above can be implemented in combination with each other.

### [Reference Numeral List]

1 boron nitride plate
2 abrasive paper
3 ceramic compact
4 needle-like silicon nitride crystal particle
5 polishing mark

## Claims

1. A boron nitride plate surface treatment method, comprising:
a first polishing process of polishing a surface of a boron nitride plate (1) by using a first polishing member having a grit within a range of not less than F120 and not more than F220 or within a range of not less than #240 and not more than #320; and
a second polishing process of polishing the surface by using a second polishing member having a grit within a range of not less than #360 and not more than #1000 after the first polishing process.

2. The boron nitride plate surface treatment method according to claim 1, wherein
the first polishing member and the second polishing member are abrasive papers (2).

3. The boron nitride plate surface treatment method according to any one of claims 1 to 2, wherein
in the first polishing process, a pressing amount of the first polishing member is not less than 0.2 mm and not more than 1.0 mm, and a processing point speed is not less than 80 mm/s and not more than 180 mm/s.

4. The boron nitride plate surface treatment method according to any one of claims 1 to 2, wherein
in the second polishing process, a pressing amount of the second polishing member is not less than 0.2 mm and not more than 1.0 mm, and a processing point speed is not less than 20 mm/s and not more than 100 mm/s.

5. The boron nitride plate surface treatment method according to claim 2, wherein
a processing point speed in the first polishing process is faster than a processing point speed in the second polishing process.

6. The boron nitride plate surface treatment method according to any one of claims 1 to 2, wherein
the surface after the second polishing process has no needle-like silicon nitride crystal particles (4), and has no recesses of 40 µm or more in depth.

7. The boron nitride plate surface treatment method according to any one of claims 1 to 2, wherein
a warp amount of the boron nitride plate (1) after the second polishing process is not more than 0.1 mm, and
a maximum height roughness Rz of the boron nitride plate (1) after the second polishing process is not more than 40 µm.

8. A method for producing a ceramic sintered body, the method comprising:
placing a ceramic compact (3) on the surface processed by the surface treatment method according to any one of claims 1 to 2;
degreasing the ceramic compact (3); and
sintering the degreased ceramic compact (3).

9. The method for producing the ceramic sintered body according to claim 8, wherein
the obtained ceramic sintered body is plate-shaped.

10. The method for producing the ceramic sintered body according to claim 8, wherein
the obtained ceramic sintered body is plate-shaped,
a warp amount of the ceramic sintered body is not more than 0.1 mm, and
a maximum height roughness Rz of the ceramic sintered body is not more than 20 µm.

11. The method for producing the ceramic sintered body according to claim 8, wherein
the ceramic sintered body is a silicon nitride sintered body.

12. A method for producing a boron nitride plate (1), the method comprising:
preparing the boron nitride plate (1) made of a boron nitride sintered body;
a first polishing process of polishing a surface of the boron nitride plate (1) by using a first polishing member within a range of not less than F120 and not more than F220 or within a range of not less than #240 and not more than #320; and
a second polishing process of polishing the surface by using a second polishing member within a range of not less than #360 and not more than #1000 after the first polishing process.
